# EUROPEAN PATENT SPECIFICATION

(11) **EP 4 611 162 B1**
(45) Date of publication and mention of the grant of the patent: **11.03.2026**
(21) Application number: 25181625.2
(22) Date of filing: 16.03.2022
(51) Int. Cl.: H01M 10/0587, H01M 10/0525, H01M 50/595, H01M 50/538, H01M 50/533, H01M 50/474, H01M 50/105, H01M 10/04, H01M 50/531

(54) **JELLY ROLL AND POUCH CELL**
JELLY-ROLL UND POUCH-ZELLE
ROULEAU DE GELÉE ET CELLULE EN SACHET

(30) Priority: 25.03.2021 CN 202110317744
(43) Date of publication of application: 03.09.2025
(62) Divisional of application: 22774096.6
(73) Proprietor: Zhuhai CosMX Battery Co., Ltd., Zhuhai, Guangdong 519180 (CN)
(72) Inventor: ZHANG, Baohai, Zhuhai, 519180 (CN); PENG, Chong, Zhuhai, 519180 (CN); LI, Junyi, Zhuhai, 519180 (CN)
(74) Representative: Murgitroyd & Company

(56) References cited:
- EP-A1- 3 648 202
- US-A1- 2019 140 241

## Description

### TECHNICAL FIELD

The present application relates to the field of lithium battery technologies, and in particular, to a jelly roll and a pouch cell.

### BACKGROUND

With the advancement of science and technology, lithium-ion battery technologies have witnessed significant progress. There are increasing demands from users for lithium-ion batteries with fast-charging capabilities and high charge-discharge rates, making fast-charging lithium batteries a prominent trend in consumer electronics.

An interface adhesion of a lithium-ion battery during high-rate charging plays a crucial role in a long cycle life, prevention of battery expansion, and avoidance of deformation. A key factor determining a good interface adhesion of the lithium-ion battery is uniform distribution of pressure experienced by the lithium-ion battery during a battery formation process. Achieving the uniform distribution of the pressure relies on a flatness of an entire battery cell during a design of the battery cell, that is, a smaller a difference between a highest point of a surface of the battery cell and a lowest point of a surface of the battery cell, a better a flatness of the battery cell is. The battery cell includes a jelly roll and a housing that encloses the jelly roll.

However, in the related technology, surface unevenness of the jelly roll is relatively serious, thereby affecting a flatness of a battery cell.

### SUMMARY

Objectives of the present application provide a jelly roll and a pouch cell, to solve a problem of surface unevenness of a jelly roll, so as to improve a flatness of a battery cell, further improving an interface adhesion effect of a lithium-ion battery, and finally aiming to achieve a better cycle life of the lithium-ion battery and solve problems of expansion and deformations of the lithium-ion battery.

According to a first aspect, the present application provides a jelly roll, including: a negative electrode plate, along a winding direction, an inner surface of a bending region of the negative electrode plate is covered by a first tape layer, and in a thickness direction of the jelly roll, a projection of two ends of the first tape layer is connected to or partially overlapped with a projection of a winding head of the negative electrode plate; a recessed portion is disposed on a side, away from the negative electrode single-sided region uncoated with active layer, of the first tape layer; a thickness of the first tape layer at the recessed portion is less than a thickness of at least one portion, different from the recessed portion, of the first tape layer; and the first tape layer includes a substrate layer and an adhesive layer, and the first tape layer adheres to a surface of the bending region through the adhesive layer.

The jelly roll provided by the present application includes the negative electrode plate, along the winding direction, the inner surface of the bending region of the negative electrode plate is covered by the first tape layer, and in the thickness direction of the jelly roll, the projection of the two ends of the first tape layer is connected to or partially overlapped with the projection of the winding head of the negative electrode plate, so that a thickness of an end, close to the bending region, of the jelly roll increases, to make a thickness of an end, away from the bending region, of the jelly roll substantially equal to the thickness of the end, close to the bending region, of the jelly roll. Therefore, a problem of the surface unevenness of the jelly roll can be solved, improving the flatness of the battery cell and enhancing the interface adhesion effect of the battery after battery formation, and finally aiming to achieve the better cycle life of the battery and solve the problems of the expansion and deformations of the battery.

Optionally, the above-mentioned jelly roll further includes a negative tab, the negative electrode plate includes a negative electrode current collector and a negative electrode active layer, and the negative electrode active layer is coated on two opposite sides of the negative electrode current collector; and a winding head of the negative electrode current collector is sequentially exposed along the winding direction to form a negative electrode double-sided region uncoated with active layer and a negative electrode single-sided region uncoated with active layer, and the negative tab is disposed within the negative electrode double-sided region uncoated with active layer; and the first tape layer is located within the negative electrode single-sided region uncoated with active layer, and in the thickness direction of the jelly roll, the projection of the two ends of the first tape layer is connected to a projection of an end, close to the bending region, of the negative tab.

As for the above-mentioned jelly roll, optionally, a material of the substrate layer includes: at least one of cast polypropylene, uniaxially stretched polypropylene, biaxially stretched polypropylene, polyethylene, polyester fiber or polyvinyl chloride; and a material of the adhesive layer includes: at least one of water-based adhesive, oil-based adhesive, hot melt adhesive, natural rubber or synthetic rubber.

As for the above-mentioned jelly roll, optionally, a thickness of a middle region of the recessed portion is less than a thickness of another region of the recessed portion, the middle region of the recessed portion is a middle region of the recessed portion in a length direction of the negative electrode plate, and a thickness of the recessed portion gradually increases from the middle region towards both sides of the recessed portion; and the at least one portion includes portions respectively close to two ends of the recessed portion.

As for the above-mentioned jelly roll, optionally, the thickness of the middle region of the recessed portion ranges from 3 µm to 8 µm.

As for the above-mentioned jelly roll, optionally, in the length direction of the negative electrode plate, a size of an opening of the recessed portion ranges from 1 mm to 5 mm.

As for the above-mentioned jelly roll, optionally, the middle region of the recessed portion corresponds to a middle region of the negative electrode single-sided region uncoated with active layer in the length direction of the negative electrode plate.

Optionally, the above-mentioned jelly roll further includes a negative tab and a negative tab tape layer, a surface of the negative tab is covered by the negative tab tape layer, and in the length direction of the negative electrode plate, a length of the negative tab tape layer is equal to a first length value, a length of the negative tab is equal to a second length value, and the first length value is greater than or equal to the second length value.

Optionally, the above-mentioned jelly roll further includes a negative tab, a positive electrode plate and a positive tab assembly, the positive electrode plate includes a positive electrode current collector and a positive electrode active layer, and the positive electrode active layer is coated on two opposite sides of the positive electrode current collector; and a winding head of the positive electrode current collector is exposed to form a positive electrode double-sided region uncoated with active layer, the positive tab assembly is disposed within the positive electrode double-sided region uncoated with active layer and has a preset distance from the negative tab, and the negative tab is located between the positive tab assembly and the bending region; and two opposite sides of the positive electrode double-sided region uncoated with active layer are both provided with a second tape layer, first ends of the two second tape layers are respectively overlapped at first ends of the positive electrode active layers located on the two opposite sides of the positive electrode current collector, and second ends of the two second tape layers are both connected to an end, away from the negative tab, of the positive tab assembly.

As for the above-mentioned jelly roll, optionally, the positive tab assembly includes a positive tab, a first positive tab tape layer, and a second positive tab tape layer, a surface of the positive tab is covered by the first positive tab tape layer, and a side, away from the positive tab, of the positive electrode double-sided region uncoated with active layer is covered by the second positive tab tape layer, with a position of the second positive tab tape layer being opposite to a position of the first positive tab tape layer; second ends of the two second tape layers are respectively connected to the first positive tab tape layer and an end, away from the negative tab, of the second positive tab tape layer.

As for the above-mentioned jelly roll, optionally, the second tape layer located on a side, away from the positive tab, of the positive electrode double-sided region uncoated with active layer is integrated with the second positive tab tape layer.

As for the above-mentioned jelly roll, optionally, the second tape layer located on a side, provided with the positive tab, of the positive electrode double-sided region uncoated with active layer is integrated with the second positive tab tape layer.

As for the above-mentioned jelly roll, optionally, two third tape layers are disposed on a winding tail of the positive electrode plate, first ends of the two third tape layers are respectively overlapped at second ends, located on the two opposite sides of the positive electrode current collector, of the positive electrode active layer, and in the thickness direction of the jelly roll, projections of second ends of the two third tape layers are both connected to a projection of an end, away from the negative tab, of the positive tab.

As for the above-mentioned jelly roll, optionally, a sum of thicknesses of the two second tape layers and thicknesses of the two third tape layers is equal to a first thickness value, a sum of a thickness of the positive tab, a thickness of the first positive tab tape layer, and a thickness of the second positive tab tape layer is equal to a second thickness value; and a difference between the first thickness value and the second thickness value ranges from 80% to 120%.

Optionally, the above-mentioned jelly roll further includes a separator, the separator is disposed between the positive electrode plate and the negative electrode plate; a sum of a thickness of the positive tab, a thickness of the first positive tab tape layer, a thickness of the second positive tab tape layer, a twice thickness of the positive electrode current collector, and a twice thickness of the separator is equal to a third thickness value, and a twice thickness of the first tape layer is equal to a fourth thickness value; and a difference between the third thickness value and the fourth thickness value ranges from 80% to 120%.

Optionally, the above-mentioned jelly roll further includes a fourth tape layer, the fourth tape layer is adhered to at least one side of an outer surface of the jelly roll, and in the thickness direction of the jelly roll, a projection of the fourth tape layer is located between a projection of the negative tab and a projection of the positive tab.

Optionally, the above-mentioned jelly roll further includes a protective tape layer disposed on two opposite sides of a portion of the positive electrode current collector between the positive tab and the negative tab.

As for the above-mentioned jelly roll, optionally, in the thickness direction of the jelly roll, an end of a winding tail of the positive electrode current collector extends to a portion between a projection of the positive tab and a projection of the negative tab, and the winding tail of the positive electrode current collector is provided with a sealing tape layer.

According to a second aspect, the present application provides a pouch cell, including: a housing and the above-mentioned jelly roll, and the jelly roll is packaged within the housing.

The pouch cell provided by the present application includes the housing and the jelly roll, and the jelly roll is packaged within the housing. Under the condition that the surface unevenness of the jelly roll is improved, a flatness of the pouch cell is also improved, so as to improve the interface adhesion effect of the pouch cell after the battery formation, and finally aiming to achieve the better cycle life of the pouch cell and solve problems of the expansion and deformations of the pouch cell.

The jelly roll includes a negative electrode plate, along the winding direction, the inner surface of the bending region of the negative electrode plate is covered by the first tape layer, and in the thickness direction of the jelly roll, the projection of the two ends of the first tape layer is connected to or partially overlapped with the projection of the winding head of the negative electrode plate, so that the thickness of the end, close to the bending region, of the jelly roll increases, to make the thickness of the end, away from the bending region, of the jelly roll substantially equal to the thickness of the end, close to the bending region, of the jelly roll. Therefore, the problem of the surface unevenness of the jelly roll can be solved, improving the flatness of the battery cell and enhancing the interface adhesion effect of the battery after the battery formation, and finally aiming to achieve the better cycle life of the battery and solve the problems of the expansion and deformations of the battery.

### BRIEF DESCRIPTION OF THE DRAWINGS

To describe the technical solutions in the embodiments of the present application or in the conventional technology more clearly, the following briefly describes the accompanying drawings required for describing the embodiments or the conventional technology. Apparently, the accompanying drawings in the following description show some embodiments of the present application, and a person of ordinary skill in the art may still derive other drawings from these accompanying drawings without creative efforts.
FIG. 1 is a top view of a jelly roll according to an embodiment of the present application;
FIG. 2 is an enlarged view of a middle region of the jelly roll in FIG. 1;
FIG. 3 a main view of a negative electrode plate of a jelly roll according to an embodiment of the present application;
FIG. 4 is a top view of a negative electrode plate of a jelly roll according to an embodiment of the present application;
FIG. 5 is an enlarged view of a region Ain FIG. 4;
FIG. 6 is a main view of a jelly roll according to an embodiment of the present application; and
FIG. 7 is a cross-sectional view of a region B-B in FIG. 6.

### Reference numerals:

20-jelly roll; 21-negative electrode plate; 211-negative electrode current collector; 2111-negative electrode double-sided region uncoated with active layer; 2112-negative electrode single-sided region uncoated with active layer; 21121-bending region; 212-negative electrode active layer; 22-negative tab; 23-positive electrode plate; 231-positive electrode current collector; 2311-positive electrode double-sided region uncoated with active layer; 232-positive electrode active layer; 24-positive tab; 31-first tape layer; 311-recessed portion; 32-second tape layer; 33-third tape layer; 34-fourth tape layer; 35-protective tape layer; 36-sealing tape layer; 41-negative tab tape layer; 42-negative tab pad; 51-first positive tab tape layer; and 52-second positive tab tape layer.

### DETAILED DESCRIPTIONS OF THE EMBODIMENTS

In related technologies, a jelly roll mainly includes a negative electrode plate, a positive electrode plate, a separator, a negative tab and a positive tab, the negative tab is welded to a winding head of the negative electrode plate, the positive tab is welded to a winding head of the positive electrode plate, and the negative electrode plate, the positive electrode plate, and the separator are stacked in a preset order and wound in a same direction from the winding head, to finally form the jelly roll. Due to factors such as a structure of the positive/negative electrode plate, a structure of the positive/negative tab, a welding position of the positive/negative tab, and a setting method of the separator, thicknesses of different portions of the jelly roll are different, resulting in a poor flatness of the jelly roll, further affecting an interface adhesion effect of a battery after battery formation, shortening a long cycle life of the battery, and exacerbating problems of expansion and deformations of the battery.

To solve the above-mentioned problems, the present application provides a jelly roll, the jelly roll includes a negative electrode plate, along a winding direction, an inner surface of a bending region of the negative electrode plate is covered by a first tape layer, and in a thickness direction of the jelly roll, a projection of two ends of the first tape layer is connected to or partially overlapped with a projection of a winding head of the negative electrode plate, so that a thickness of an end, close to the bending region, of the jelly roll increases, to make a thickness of an end, away from the bending region, of the jelly roll substantially equal to the thickness of the end, close to the bending region, of the jelly roll. Therefore, a problem of surface unevenness of the jelly roll can be solved, improving a flatness of a battery cell and enhancing the interface adhesion effect of the battery after the battery formation, and finally aiming to achieve a better cycle life of the battery and solve the problems of the expansion and deformations of the battery.

In order to make the purposes, technical solutions, and advantages of the embodiments of the present application clearer, the technical solutions in the embodiments of the present application are described hereinafter clearly and completely, with reference to accompanying drawings in the embodiments of the present invention. Apparently, the described embodiments are only a part, but not all, of the embodiments of the present invention. All of the other embodiments that are obtained by those of ordinary skill in the art based on the embodiments in the present application without any inventive efforts fall into the scope protected by the present application.

### Embodiment 1

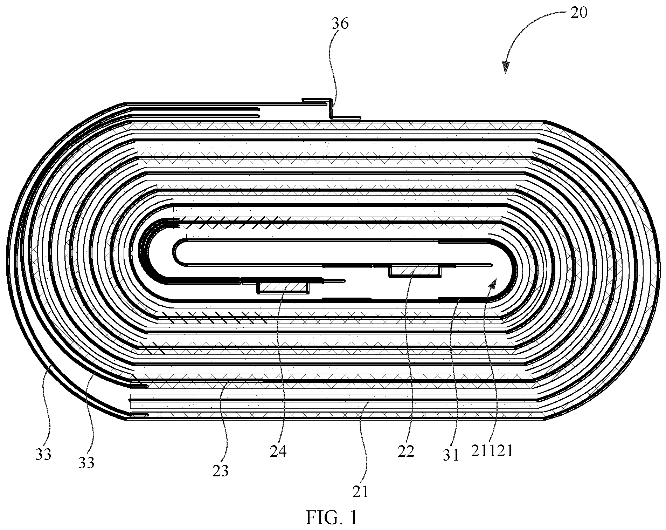

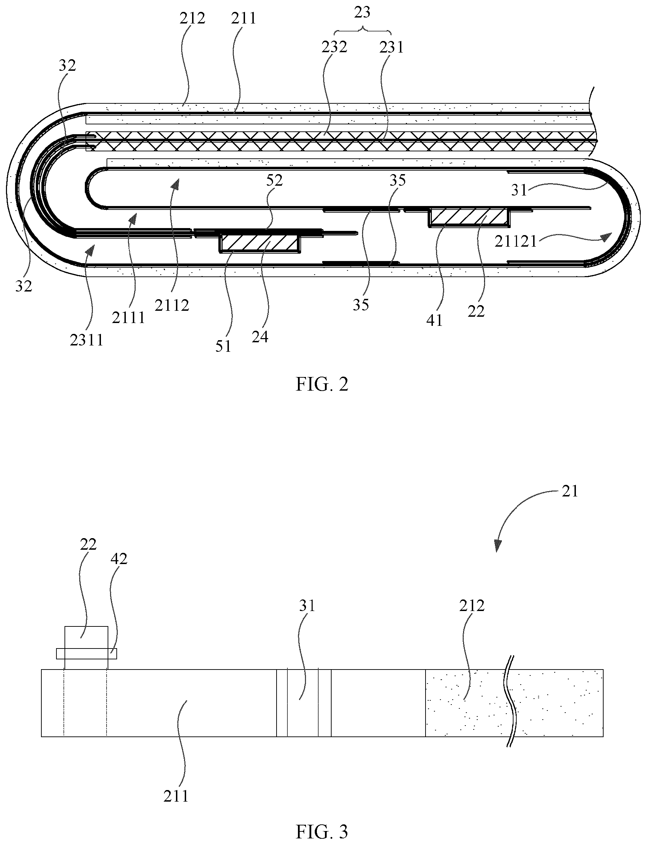

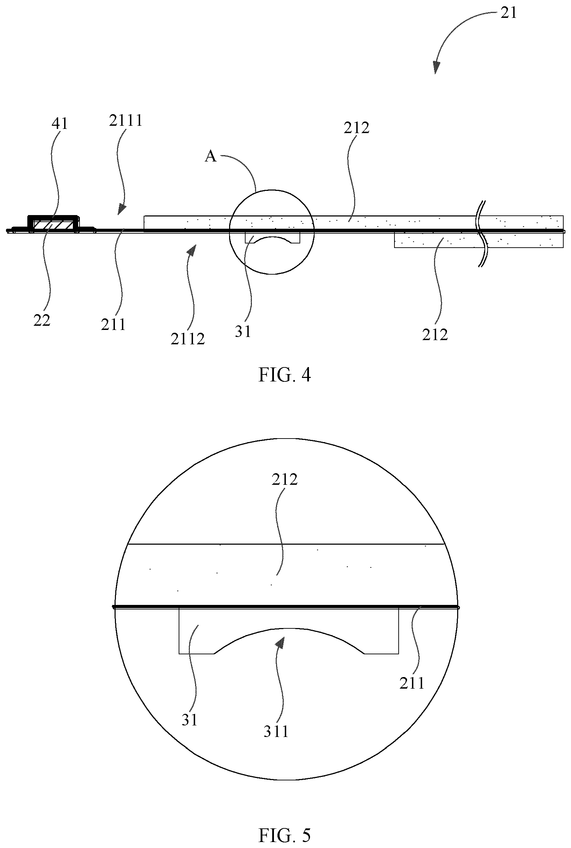

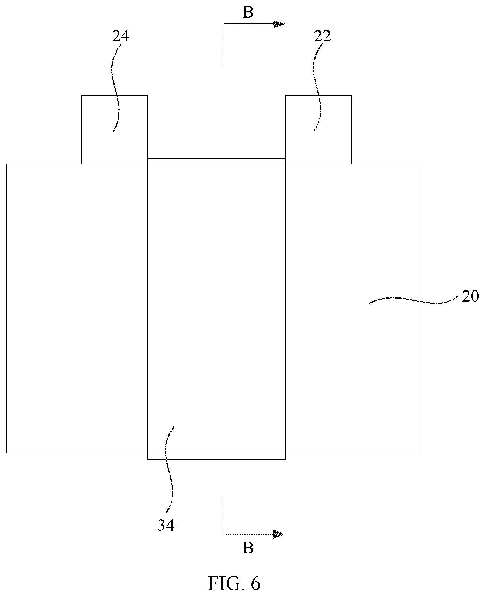

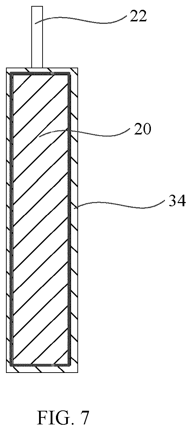

FIG. 1 is a top view of a jelly roll according to an embodiment of the present application; FIG. 2 is an enlarged view of a middle region of the jelly roll in FIG. 1; FIG. 3 is a main view of a negative electrode plate of a jelly roll according to an embodiment of the present application; FIG. 4 is a top view of a negative electrode plate of a jelly roll according to an embodiment of the present application; FIG. 5 is an enlarged view of a region A in FIG. 4; FIG. 6 is a main view of a jelly roll according to an embodiment of the present application; and FIG. 7 is a cross-sectional view of a region B-B in FIG. 6.

Referring to FIG. 1 to FIG. 6, the present application provides a jelly roll, the jelly roll 20 includes a negative electrode plate 21, along a winding direction, an inner surface of a bending region 21121 of the negative electrode plate 21 is covered by a first tape layer 31, and in a thickness direction of the jelly roll, a projection of two ends of the first tape layer 31 is connected to or partially overlapped with a projection of a winding head of the negative electrode plate 21.

The jelly roll provided by the present application includes a negative electrode plate, along the winding direction, the inner surface of the bending region of the negative electrode plate is covered by the first tape layer, and in the thickness direction of the jelly roll, the projection of the two ends of the first tape layer is connected to or partially overlapped with the projection of the winding head of the negative electrode plate, so that a thickness of an end, close to the bending region, of the jelly roll increases, to make a thickness of an end, away from the bending region, of the jelly roll substantially equal to the thickness of the end, close to the bending region, of the jelly roll. Therefore, a problem of surface unevenness of the jelly roll can be solved, improving a flatness of a battery cell and enhancing an interface adhesion effect of a battery after battery formation, and finally aiming to achieve a better cycle life of the battery and solve problems of expansion and deformations of the battery.

Optionally, the jelly roll 20 further includes a negative tab 22, the negative electrode plate 21 includes a negative electrode current collector 211 and a negative electrode active layer 212, and the negative electrode active layer 212 is coated on two opposite sides of the negative electrode current collector 211. Exemplarily, the negative electrode current collector 211 is usually made of copper foil. Actually, the negative electrode current collector 211 may also be made of other materials according to actual requirements, as long as the other materials can meet the requirements of the jelly roll 20.

A winding head of the negative electrode current collector 211 is sequentially exposed along the winding direction to form a negative electrode double-sided region uncoated with active layer 2111 and a negative electrode single-sided region uncoated with active layer 2112, and the winding head refers to a starting end of the winding. The negative electrode double-sided region uncoated with active layer 2111 refers to a region where two opposite sides of the negative electrode current collector 211 are not covered by the negative electrode active layer 212, and when one side of the two opposite sides of the negative electrode current collector 211 is covered by the negative electrode active layer 212 and another side of the two opposite sides is not covered by the negative electrode active layer 212, the negative electrode single-sided region uncoated with active layer 2112 is located on the side of the negative electrode current collector 211 uncovered by the negative electrode active layer 212. The negative electrode single-sided region uncoated with active layer 2112 is located on a side, facing a center of the jelly roll 20, of the negative electrode current collector 211, and the negative electrode single-sided region uncoated with active layer 2112 is connected between the negative electrode double-sided region uncoated with active layer 2111 and the negative electrode current collector 211 coated with the negative electrode active layer 212 on the two opposite sides. The negative tab 22 is disposed within the negative electrode double-sided region uncoated with active layer 2111.

In a winding process, along the winding direction, the bending region 21121 of the negative electrode plate 21 is located within the negative electrode single-sided region uncoated with active layer 2112, i.e., the first tape layer 31 is located within the negative electrode single-sided region uncoated with active layer 2112. The bending region 21121 is opposite to an end of the winding head of the negative electrode current collector 211. Exemplarily, the end of the winding head of the negative electrode current collector 211 may extend into the bending region 21121 or be located outside the bending region 21121. In the thickness direction of the jelly roll, the projection of the two ends of the first tape layer 31 is connected to a projection of an end, close to the bending region 21121, of the negative tab 22.

Exemplarily, the first tape layer 31 may include a substrate layer and an adhesive layer, and the first tape layer 31 adheres to a surface of the bending region 21121 through the adhesive layer. A material of the substrate layer mainly includes: at least one of cast polypropylene, uniaxially stretched polypropylene, biaxially stretched polypropylene, polyethylene, polyester fiber or polyvinyl chloride, a material of the adhesive layer mainly includes: at least one of water-based adhesive, oil-based adhesive, hot melt adhesive, natural rubber or synthetic rubber, a thickness of the adhesive layer may be set to 2 µm, and a thickness of the substrate layer may be set according to actual requirements. Exemplarily, a size, in a length direction of the negative electrode plate 21, of the first tape layer 31 is equal to a twice distance between an end, facing the bending region 21121, of the negative tab 22 and an end, away from the negative tab 22, of the bending region 21121.

Along a winding direction, the first tape layer 31 is coated on a surface of the bending region 21121 of the negative electrode single-sided region uncoated with active layer 2112, and in the thickness direction of the jelly roll, the projection of the two ends of the first tape layer 31 is connected to the projection of the end, close to the bending region 21121, of the negative tab 22, to increase a thickness of an end, facing the bending region 21121, of the negative tab 22 of the jelly roll 20, making the thickness of the end, facing the bending region 21121, of the negative tab 22 of the jelly roll 20 basically equal to a thickness of a portion, provided with the negative tab 22, of the jelly roll 20. Therefore, the problem of the surface unevenness of the jelly roll 20 can be solved, improving the flatness of the battery cell and enhancing the interface adhesion effect of the battery after the battery formation, and finally aiming to achieve the better cycle life of the battery and solve the problems of the expansion and deformations of the battery.

Optionally, a recessed portion 311 is disposed on a side, away from the negative electrode single-sided region uncoated with active layer 2112, of the first tape layer 31. The setting of the recessed portion 311 can avoid an increase in a thickness of a position, corresponding to a bending position, of the jelly roll 20 caused by a mutual squeezing of a side, away from the negative electrode single-sided region uncoated with active layer 2112, of the first tape layer 31 at the bending position after the first tape layer 31 is bent with the bending region, thereby improving the surface unevenness of the jelly roll 20.

Optionally, in a length direction of the negative electrode plate 21, a thickness of a middle region of the recessed portion 311 is less than a thickness of another region of the recessed portion 311, and a thickness of the recessed portion 311 gradually increases from the middle region towards both sides of the recessed portion 311. Exemplarily, a shape of a cross-sectional profile of the recessed portion 311 may be angular or arc-shaped, so as to ensure that after the first tape layer 31 is bent along the middle region, a thickness of the first tape layer 31 remains uniform, and further improving the surface unevenness of the jelly roll 20.

Optionally, the thickness of the middle region of the recessed portion 311 ranges from 3 µm to 8 µm. Exemplarily, the thickness of the middle region of the recessed portion 311 may be set to 3 µm, 4 µm, 5 µm, 6 µm, 7 µm, 8 µm or any value between 3 µm and 8 µm according to actual requirements, so as to ensure that after the first tape layer 31 is bent, the thickness of the first tape layer 31 remains uniform, and further improving the surface unevenness of the jelly roll 20.

Optionally, in the length direction of the negative electrode plate 21, a size of an opening of the recessed portion 311 ranges from 1 mm to 5 mm. Exemplarily, in the length direction of the negative electrode plate 21, the size of the opening of the recessed portion 311 may be set to 1 mm, 2 mm, 4 mm, 5 mm, or any value between 1 mm to 5 mm. More preferably, in the length direction of the negative electrode plate 21, the size of the opening of the recessed portion 311 is set to 3 mm, so as to ensure that after the first tape layer 31 is bent, the thickness of the first tape layer 31 remains uniform, and further improving the surface unevenness of the jelly roll 20.

Optionally, the middle region of the recessed portion 311 corresponds to a middle region of the negative electrode single-sided region uncoated with active layer 2112 in the length direction of the negative electrode plate 21. Generally, the negative electrode single-sided region uncoated with active layer 2112 is bent in the middle region in the length direction of the negative electrode plate 21 to form the bending region 21121. The middle region of the recessed portion 311 of the first tape layer 31 is set to be corresponding to the middle region of the negative electrode single-sided region uncoated with active layer 2112 in the length direction of the negative electrode plate 21, so as to ensure that the middle region of the recessed portion 311 is bent with the bending region 21121, thereby ensuring that after the first tape layer 31 is bent, the thickness of the first tape layer 31 remains uniform, and further improving the surface unevenness of the jelly roll 20.

Optionally, the jelly roll 20 further includes a negative tab tape layer 41, and a surface of the negative tab 22 is covered by the negative tab tape layer 41, to prevent burrs, on the surface of the negative tab 22, from piercing a separator between the negative electrode plate 21 and the positive electrode plate 23, causing to an internal short circuit in the jelly roll 20. In the length direction of the negative electrode plate 21, A size of the negative tab tape layer 41 is greater than or equal to a size of the negative tab 22. In the length direction of the negative electrode plate 21, the size of the negative tab 22 may range from 5 mm to 10 mm, a thickness of the negative tab 22 may range from 45 µm to 110 µm, the size of the negative tab tape layer 41 may range from 10 mm to 20 mm, and a thickness of the negative tab tape layer 41 may range from 5 µm to 16 µm. Exemplarily, in the length direction of the negative electrode plate 21, when the size of the negative tab tape layer 41 is greater than the size of the negative tab 22, sizes, extending out of two sides of the negative tab 22, of the negative tab tape layer 41 may or may not be equal.

Optionally, the jelly roll 20 further includes a positive electrode plate 23 and a positive tab assembly, the positive electrode plate 23 includes a positive electrode current collector 231 and a positive electrode active layer 232, and the positive electrode active layer 232 is coated on two opposite sides of the positive electrode current collector 231. Exemplarily, the positive electrode current collector 231 is generally made of aluminum foil. Actually, the positive electrode current collector 231 may be made of other materials according to actual requirements, provided that requirements of the jelly roll 20 can be met.

A winding head of the positive electrode current collector 231 is exposed to form a positive electrode double-sided region uncoated with active layer 2311, and the winding head refers to a starting end of winding. The positive electrode double-sided region uncoated with active layer 2311 refers to a region where two opposite sides of the positive electrode current collector 231 are not covered by the positive electrode active layer 232. The positive tab assembly is disposed within the positive electrode double-sided region uncoated with active layer 2311 and has a preset distance from the negative tab 22, and the negative tab 22 is disposed between the positive tab assembly and the bending region 21121. The positive tab assembly includes the positive tab 24, and the preset distance between the positive tab 24 and the negative tab 22 may be set according to actual requirements, which is not specifically limited in the present application.

Optionally, an end of the winding head of the positive electrode current collector 231 extends to a portion between the positive tab 24 and the negative tab 22, and a protective tape layer 35 is disposed on two opposite sides of a portion of the positive electrode current collector 231 between the positive tab 24 and the negative tab 22. The protective tape layer 35 may be attached to the negative electrode current collector 211 located on the two opposite sides of the positive electrode current collector 231, or may be attached to the positive electrode current collector 231, or may be attached to the separator located on the two opposite sides of the positive electrode current collector 231. A projection, on the negative electrode current collector 211, of a first end of the protective tape layer 35 may be connected to an end, facing the positive tab 24, of the negative tab 22, and a projection, on the positive electrode current collector 231, of a second end of the protective tape layer 35 may be connected to an end, facing the negative tab 22, of the positive tab 24. On the one hand, setting the protective tape layer 35 may prevent the burrs, on the positive electrode current collector 231, from piercing the separator, causing the internal short circuit in the jelly roll 20, and, on the other hand, increase a thickness of the jelly roll 20 between the positive tab 24 and the negative tab 22, to improve the surface unevenness of the jelly roll 20.

Optionally, in the thickness direction of the jelly roll, an end of a winding tail of the positive electrode current collector 231 extends to a portion between the projection of the positive tab 24 and the projection of the negative tab 22, and the winding tail of the positive electrode current collector 231 is provided with a sealing tape layer 36. On the one hand, setting the sealing tape layer 36 may fix the winding tail of the positive electrode current collector 231 to an outer surface of the jelly roll 20, to ensure stability and reliability of a wound jelly roll 20, and, on the other hand, increase the thickness of the jelly roll 20 between the positive tab 24 and the negative tab 22, to improve the surface unevenness of the jelly roll 20.

Two opposite sides of the positive electrode double-sided region uncoated with active layer 2311 are both provided with a second tape layer 32, first ends of the two second tape layers 32 are respectively overlapped at first ends of the positive electrode active layers 232 located on the two opposite sides of the positive electrode current collector 231, and second ends of the two second tape layers 32 are both connected to an end, away from the negative tab 22, of the positive tab assembly. On the one hand, since a head end and a tail end, coating on the positive electrode current collector 231, of the positive electrode active layer 232 generally have the burrs, the first end of the second tape layer 32 is overlapped at the first end of the positive electrode active layer 232, to prevent the burrs, on the first end of the positive electrode active layer 232, from piercing the separator between the positive electrode plate 23 and the negative electrode plate 21, causing the internal short circuit in the jelly roll 20. On the other hand, the second end of the second tape layer 32 is connected to the end, away from the negative tab 22, of the positive tab assembly, so that a thickness of an end, away from the negative tab 22, of the positive tab assembly of the jelly roll 20 is substantially equal to a thickness of a portion, provided with the positive tab assembly, of the jelly roll 20, so as to improve the surface unevenness of the jelly roll 20.

In a specific implementation, thicknesses of the two second tape layers 32 may be equal or unequal according to actual requirements; and in a length direction of the positive electrode plate 23, sizes of the two second tape layer 32 may be set to be equal or unequal according to actual requirements. In an alternative implementation, in the length direction of positive electrode plate 23, the sizes of the two second tape layer 32 may be set to be equal, and exemplarily, in the length direction of the positive electrode plate 23, the size of the second tape layer 32 is equal to a distance from an end, away from the negative tab 22, of the positive tab 24 to the first end of the positive electrode active layer 232.

Optionally, the positive tab assembly includes a positive tab 24, a first positive tab tape layer 51, and a second positive tab tape layer 52. A surface of the positive tab 24 is covered by the first positive tab tape layer 51, to prevent the burrs, on the surface of the positive tab 24, from piercing the separator, causing the internal short circuit in the jelly roll 20. A side, away from the positive tab 24, of the positive electrode double-sided region uncoated with active layer 2311 is covered by the second positive tab tape layer 52, with a position of the second positive tab tape layer 52 being opposite to a position of the first positive tab tape layer 51, so as to prevent welding burrs, formed during welding of the positive tab 24 and on the side of the positive electrode double-sided region uncoated with active layer 2311 away from the positive tab 24, from piercing the separator, causing the internal short circuit in the jelly roll 20.

In the length direction of positive electrode plate 23, a size of the first positive tab tape layer 51 may be greater than or equal to a size of the positive tab 24, a size of the second positive tab tape layer 52 may be greater than or equal to the size of the positive tab 24, the size of the positive tab 24 may range from 5 mm to 10 mm, a thickness of the positive tab 24 may range from 45 µm to 110 µm, the size of first positive tab tape layer and the sizes of the first positive tab tape layer 51 and the second positive tab tape layer 52 may range from 10 mm to 20 mm, and thicknesses of the first positive tab tape layer 51 and the second positive tab tape layer 52 may range from 5 µm to 16 µm.

Exemplarily, in the length direction of the positive electrode plate 23, when the sizes of the first positive tab tape layer 51 and the second positive tab tape layer 52 are greater than the size of the positive tab 24, sizes, extending out of two sides of the positive tab 24, of the first positive tab tape layer 51 may or may not be equal, and sizes, extending out of the two sides of the positive tab 24, of the second positive tab tape layer 52 may or may not be equal.

In an alternative implementation, the second ends of the two second tape layers 32 are respectively connected to ends, away from the negative tab 22, of the first positive tab tape layer 51 and the second positive tab tape layer 52, so that a thickness of an end, away from the negative tab 22, of the positive tab 24 of the jelly roll 20 remains uniform, so as to improve the surface unevenness of the jelly roll 20.

In another alternative implementation, a second tape layer 32 located on a side, away from the positive tab 24, of the positive electrode double-sided region uncoated with active layer 2311 is integrated with the second positive tab tape layer 52, thereby further ensuring that the thickness of the end, away from the negative tab 22, of the positive tab 24 of the jelly roll 20 remains uniform, so as to improve the surface unevenness of the jelly roll 20.

Similarly, a second tape layer 32 located on a side, provided with the positive tab 24, of the positive electrode double-sided region uncoated with active layer 2311 is integrated with the first positive tab tape layer 51, so that the thickness of the end, away from the negative tab 22, of the positive tab 24 of the jelly roll 20 remains uniform, so as to improve the surface unevenness of the jelly roll 20.

Optionally, two third tape layers 33 are disposed on a winding tail of the positive electrode plate 23, first ends of the two third tape layers 33 are respectively overlapped at second ends, located on the two opposite sides of the positive electrode current collector 231, of the positive electrode active layer 232, and in the thickness direction of the jelly roll 20, projections of second ends of the two third tape layers 33 are both connected to a projection of an end, away from the negative tab 22, of the positive tab 24. On the one hand, since the head end and the tail end, coating on the positive electrode current collector 231, of the positive electrode active layer 232 generally have the burrs, the first end of the third tape layer 33 is overlapped at the second end of the positive electrode active layer 232, to prevent the burrs, on the second end of the positive electrode active layer 232, from piercing the separator between the positive electrode plate 23 and negative electrode plate 21, causing the internal short circuit in the jelly roll 20. On the other hand, in the thickness direction of the jelly roll 20, the projections of the second ends of the two third tape layers 33 are both connected to the projection of the end, away from the negative tab 22, of the positive tab 24, thereby further ensuring that the thickness of the end, away from the negative tab 22, of the positive tab 24 of the jelly roll 20 substantially coincides with a thickness of a portion, provided with the positive tab 24, of the jelly roll 20, so as to improve the surface unevenness of the jelly roll 20.

In a specific implementation, thicknesses of the two third tape layers 33 may be equal or unequal according to actual requirements, and in the length direction of the positive electrode plate 23, sizes of the two third tape layers 33 may be set to be equal or unequal according to actual requirements. In an alternative implementation, in the length direction of the positive electrode plate 23, the sizes of the two third tape layers 33 may be set to be equal, and exemplarily, size of the third tape layer 33 = thickness of the jelly roll × 3.14 ÷ 2 + thickness of the jelly roll ÷ 2 + horizontal distance between the end, away from the negative tab 22, of the positive tab 24 and the first end of the positive electrode active layer 232 + δ, where δ is the tolerance, 2 mm ≤ δ ≤ 3 mm.

Optionally, a sum of thicknesses of the two second tape layers 32 and thicknesses of the two third tape layers 33 is equal to a first thickness value, a sum of a thickness of the positive tab 24, a thickness of the first positive tab tape layer 51, and a thickness of the second positive tab tape layer 52 is equal to a second thickness value, and a difference between the first thickness value and the second thickness value ranges from 80% to 120%. Exemplarily, the first thickness value may be equal to the second thickness value, or the first thickness value may be less than the second thickness value, or the first thickness value may be greater than the second thickness value, provided that the difference between the first thickness value and the second thickness value ranges from 80% to 120%, thereby ensuring that the thickness of the end, away from the negative tab 22, of the positive tab 24 of the jelly roll 20 substantially coincides with the thickness of the portion, provided with the positive tab 24, of the jelly roll 20, so as to improve the surface unevenness of the jelly roll 20.

The jelly roll 20 further a separator (not shown in figures) disposed between the positive electrode plate 23 and the negative electrode plate 21, to insulate the positive electrode plate 23 and the negative electrode plate 21. Optionally, a sum of a thickness of the positive tab 24, a thickness of the first positive tab tape layer 51, a thickness of the second positive tab tape layer 52, a twice thickness of the positive electrode current collector, and a twice thickness of the separator is equal to a third thickness value, and a twice thickness of the first tape layer is equal to a fourth thickness value, and a difference between the third thickness value and the fourth thickness value ranges from 80% to 120%. Exemplarily, the third thickness value may be equal to the fourth thickness value, or the third thickness value is less than the fourth thickness value, or the third thickness value is greater than the fourth thickness value, provided that the difference between the third thickness value and the fourth thickness value ranges from 80% to 120%. When the thickness of the positive tab 24 is equal to the thickness of the negative tab 22 and the thickness of the negative tab tape layer 41 is equal to the thickness of the first positive tab tape layer 51, the above-mentioned relationship may be expressed as the thickness of the negative tab 22, the thickness of the negative tab tape layer 41, the thickness of the second positive tab tape layer 52, the twice thickness of the positive electrode current collector 231, and the twice thickness of the separator being equal to the twice thickness of the first tape layer 31, thereby ensuring that the thickness of the end, away from the negative tab 22, of the positive tab 24 of the jelly roll 20 substantially coincides with the thickness of the portion, provided with the positive tab 24, of the jelly roll 20, so as to improve the surface unevenness of the jelly roll 20.

Optionally, the negative tab 22 includes a negative tab welding section and a negative tab free section connected to each other, the negative tab welding section extends along a width direction of the negative electrode plate 21 to be welded inside the negative electrode double-sided region uncoated with active layer 2111, and the negative tab free section extends outside the negative electrode double-sided region uncoated with active layer 2111. A length of the negative tab welding section is greater than or equal to a width of the negative electrode plate 21, thereby ensuring that in the width direction of the negative electrode plate 21, a thickness of the jelly roll 20 maintains uniform, so as to improve the surface unevenness of the jelly roll 20.

Further, an end, close to the negative tab welding section, of the negative tab free section is provided with a negative tab pad 42, and when the jelly roll 20 is packaged in a housing, a gap, between the negative tab 22 and the housing, may be sealed by using the negative tab pad 42. When the length of the negative tab welding section is greater than the width of the negative electrode plate 21, a portion, extending outside the negative electrode plate 21, of the negative tab welding section (i.e., a portion where the length of the negative tab welding section differs from the width of the negative electrode plate 21) may be disposed between the negative electrode plate 21 and the negative tab pad 42. On the one hand, a hot melt extension space of the negative tab pad 42 is reserved to avoid embedding the melted negative tab pad 42 between the positive electrode plate 23 and the negative electrode plate 21 during packaging. On the other hand, a bending and adjustment space is reserved at an end, close to the negative electrode plate 21, of the negative tab 22, so as to prevent the negative tab pad 42 from being directly attached to an end surface formed by the winding of the positive electrode plate 23 and the negative electrode plate 21 when a position of the negative tab 22 is adjusted by bending. Exemplarily, a difference between the length of the negative tab welding section and the width of the negative electrode plate 21 ranges from 0.5 mm to 1.5 mm. Specifically, the difference between the length of the negative tab welding section and the width of the negative electrode plate 21 may be set to 0.5 mm, 0.7 mm, 0.9 mm, 1.1 mm, 1.3 mm, 1.5 mm, or any value between 0.5 mm and 1.5 mm, depending on actual requirements.

Optionally, the positive tab 24 includes a positive tab welding section and a positive tab free section connected to each other, the positive tab free section extends along a width direction of the positive electrode plate 23 to be welded inside the positive electrode double-sided region uncoated with active layer 2311, and the positive tab free section extends outside the positive electrode double-sided region uncoated with active layer 2311. A length of the positive tab welding section is greater than or equal to the width of the positive electrode plate 23, thereby ensuring that in the width direction of the positive electrode plate 21, the thickness of the jelly roll 20 maintains uniform, so as to improve the surface unevenness of the jelly roll 20.

Generally, the width of the positive electrode plate 23 is greater than the width of the negative electrode plate 21, and a difference between the width of the positive electrode plate 23 and the width of the negative electrode plate 21 ranges from 0.5 mm to 2 mm. Exemplarily, the difference between the width of the positive electrode plate 23 and the width of the negative electrode plate 21 may be set to 0.5 mm, 1 mm, 1.5 mm, 2 mm, or any value between 0.5 mm and 2 mm, depending on actual requirements.

Further, an end, close to the positive tab welding section, of the positive tab free section is provided with a positive tab pad (not shown in figures), and when the jelly roll 20 is packaged in a housing, a gap between the positive tab 24 and the housing may be sealed by using the positive tab pad. When the length of the positive tab welding section is greater than the width of the positive electrode plate 23, a portion, extending outside the positive electrode plate 23, of the positive tab welding section (i.e., a portion where the length of the positive tab welding section differs from the width of the positive electrode plate 23) may be disposed between the positive electrode plate 23 and the negative tab pad. On the one hand, a hot melt extension space of the positive tab pad is reserved to avoid embedding the melted positive tab pad between the positive electrode plate 23 and the negative electrode plate 21 during packaging. On the other hand, a bending and adjustment space, close to an end of the positive electrode plate 23, of the positive tab 24 is reserved at an end, close to the positive electrode 23, of the positive tab 24, so as to prevent the positive tab pad from being directly attached to the end surface formed by the winding of the positive electrode plate 23 and the negative electrode plate 21 when a position of the positive tab 24 is adjusted by bending. Exemplarily, a difference between the length of the positive tab welding section and the width of the positive electrode plate 23 ranges from 0.5 mm to 1.5 mm. Specifically, the difference between the length of the positive tab welding section and the width of the positive electrode plate 23 may be set to 0.5 mm, 0.7mm, 0.9mm, 1.1mm, 1.3mm, 1.5 mm, or any value between 0.5 mm and 1.5 mm, depending on actual requirements.

Optionally, the jelly roll 20 further includes a fourth tape layer 34, the fourth tape layer 34 is adhered to at least one side of an outer surface of the jelly roll 20, and in the thickness direction of the jelly roll, a projection of the fourth tape layer 34 is located between the projection of the negative tab 22 and the projection of the positive tab 24. Specifically, the fourth tape layer 34 may be adhered to either side of the outer surface of the jelly roll 20, or the fourth tape layer 34 may be adhered to two opposite sides of the outer surface of the jelly roll 20. Exemplarily, the fourth tape layer 34 may be wrapped around the outer surface of the jelly roll 20, or may be adhered to only two opposite sides of the jelly roll 20. On the one hand, setting the fourth tape layer 34 can make a thickness of a portion, located between the negative tab 22 and the positive tab 24, of the jelly roll 20 substantially coincides with a thickness of a portion, provided with the negative tab 22 and the positive tab 24, of the jelly roll 20, improving the flatness of the jelly roll 20 and enhancing the interface adhesion effect of the jelly roll 20 after the battery formation, and finally aiming to achieve the better cycle life of the battery and solve the problems of the expansion and deformations of the battery. On the other hand, setting the fourth tape layer 34 can provide a cushion when the jelly roll 20 falls or is impacted, improving falling performance of the jelly roll 20.

Optionally, in the thickness direction of the jelly roll, a width of the fourth tape layer 34 is less than or equal to a distance between the projection of the negative tab 22 and the projection of the positive tab 24, to ensure that the fourth tape layer 34 is disposed between the negative tab 22 and the positive tab 24, thereby improving the flatness of the jelly roll 20.

Optionally, a twice thickness of the fourth tape layer 34 is equal to the thickness of the negative tab 22, or a twice thickness of the fourth tape layer 34 is equal to the thickness of the positive tab 24. Setting the fourth tape layer 34 may increase the thickness of the portion, located between the negative tab 22 and the positive tab 24, of the jelly roll 20, so that the thickness of the portion, located between the negative tab 22 and the positive tab 24, of the jelly roll 20 is substantially equal to the thickness of the portion, provided with the negative tab 22 and the positive tab 24, of the jelly roll 20, thereby improving the flatness of the jelly roll 20. The thickness of the negative tab 22 may be equal to the thickness of the positive tab 24.

### Embodiment 2

On the basis of the Embodiment 1, this embodiment provides a pouch cell, the pouch cell includes a housing and a jelly roll, and the jelly roll is packaged within the housing. Exemplarily, the housing may be an aluminum plastic film housing.

The jelly roll provided in this embodiment has the same structure as the jelly roll in the Embodiment 1, and has the same or similar technical effects as the jelly roll in the Embodiment 1, specifically referring to the Embodiment 1.

The pouch cell provided by this embodiment includes the housing and the jelly roll packaged within the housing. Under a condition of the surface unevenness of the jelly roll being improved, a flatness of the pouch cell is also improved, improving an interface adhesion effect of the pouch cell after a battery formation, and finally aiming to achieve a better cycle life of the pouch cell and solve problems of expansion and deformations of the pouch cell.

In the description of this application, it should be noted that, unless otherwise expressly specified and limited, the terms "installed", "connected", "attached" and "adhered" should be understood in a broad sense. For example, it may be a fixed connection, or it can be a detachable connection; or it can be in contact with each other; or it can be an integral part; or it can be a mechanical connection or an electrical connection; or it can be directly connected or indirectly connected through an intermediate medium; or it can be internal communication between two components. For those of ordinary skill in the art, the specific meanings of the above terms in the present application may be understood through specific situations.

The terms "first" and "second" in the description and claims of the present application and the above description of the drawings are used to distinguish similar objects, and are not necessarily used to describe a specific order or sequence. It is to be understood that the data so used may be interchanged under appropriate circumstances such that the embodiments of the application described herein can, for example, be practiced in sequences other than those illustrated or described herein.

Finally, it should be noted that the above embodiments are only used to illustrate the technical solutions of the present application; although the present application has been described in detail with reference to the foregoing embodiments, those of ordinary skill in the art should understand that: the technical solutions described in the foregoing embodiments may still be modified, or some or all of the technical features thereof may be equivalently replaced.

## Claims

1. A jelly roll, comprising: a negative electrode plate, wherein along a winding direction, an inner surface of a bending region of the negative electrode plate is covered by a first tape layer, and in the thickness direction of the jelly roll, a projection of two ends of the first tape layer is connected to or partially overlapped with a projection of a winding head of the negative electrode plate;
a recessed portion is disposed on a side, away from the negative electrode single-sided region uncoated with active layer, of the first tape layer;
a thickness of the first tape layer at the recessed portion is less than a thickness of at least one portion, different from the recessed portion, of the first tape layer; and
the first tape layer comprises a substrate layer and an adhesive layer, and the first tape layer adheres to a surface of the bending region through the adhesive layer.

2. The jelly roll according to claim 1, further comprising: a negative tab, wherein the negative electrode plate comprises a negative electrode current collector and a negative electrode active layer, and the negative electrode active layer is coated on two opposite sides of the negative electrode current collector; and a winding head of the negative electrode current collector is sequentially exposed along the winding direction to form a negative electrode double-sided region uncoated with active layer and a negative electrode single-sided region uncoated with active layer, and the negative tab is disposed within the negative electrode double-sided region uncoated with active layer; and
the first tape layer is located within the negative electrode single-sided region uncoated with active layer, and in the thickness direction of the jelly roll, the projection of the two ends of the first tape layer is connected to a projection of an end, close to the bending region, of the negative tab.

3. The jelly roll according to claim 1, wherein a material of the substrate layer comprises: at least one of cast polypropylene, uniaxially stretched polypropylene, biaxially stretched polypropylene, polyethylene, polyester fiber or polyvinyl chloride; and a material of the adhesive layer comprises: at least one of water-based adhesive, oil-based adhesive, hot melt adhesive, natural rubber or synthetic rubber.

4. The jelly roll according to claim 1, wherein a thickness of a middle region of the recessed portion is less than a thickness of another region of the recessed portion, the middle region of the recessed portion is a middle region of the recessed portion in a length direction of the negative electrode plate, and a thickness of the recessed portion gradually increases from the middle region towards both sides of the recessed portion; and
the at least one portion comprises portions respectively close to two ends of the recessed portion.

5. The jelly roll according to claim 1, wherein the thickness of the middle region of the recessed portion ranges from 3 µm to 8 µm; and/or
in the length direction of the negative electrode plate, a size of an opening of the recessed portion ranges from 1 mm to 5 mm; and/or
the middle region of the recessed portion corresponds to a middle region of the negative electrode single-sided region uncoated with active layer in the length direction of the negative electrode plate.

6. The jelly roll according to any one of claims 1 to 5, further comprising a negative tab and a negative tab tape layer, wherein a surface of the negative tab is covered by the negative tab tape layer, and in the length direction of the negative electrode plate, a length of the negative tab tape layer is equal to a first length value, a length of the negative tab is equal to a second length value, and the first length value is greater than or equal to the second length value.

7. The jelly roll according to any one of claims 1 to 6, further comprising a negative tab, a positive electrode plate and a positive tab assembly, wherein the positive electrode plate comprises a positive electrode current collector and a positive electrode active layer, and the positive electrode active layer is coated on two opposite sides of the positive electrode current collector; and a winding head of the positive electrode current collector is exposed to form a positive electrode double-sided region uncoated with active layer, the positive tab assembly is disposed within the positive electrode double-sided region uncoated with active layer and has a preset distance from the negative tab, and the negative tab is located between the positive tab assembly and the bending region; and
two opposite sides of the positive electrode double-sided region uncoated with active layer are both provided with a second tape layer, first ends of the two second tape layers are respectively overlapped at first ends of the positive electrode active layers located on the two opposite sides of the positive electrode current collector, and second ends of the two second tape layers are both connected to an end, away from the negative tab, of the positive tab assembly.

8. The jelly roll according to claim 7, wherein the positive tab assembly comprises a positive tab, a first positive tab tape layer, and a second positive tab tape layer, a surface of the positive tab is covered by the first positive tab tape layer, and a side, away from the positive tab, of the positive electrode double-sided region uncoated with active layer is covered by the second positive tab tape layer, with a position of the second positive tab tape layer being opposite to a position of the first positive tab tape layer;
wherein second ends of the two second tape layers are respectively connected to the first positive tab tape layer and an end, away from the negative tab, of the second positive tab tape layer; and/or
the second tape layer located on a side, away from the positive tab, of the positive electrode double-sided region uncoated with active layer is integrated with the second positive tab tape layer; and/or
the second tape layer located on a side, provided with the positive tab, of the positive electrode double-sided region uncoated with active layer is integrated with the second positive tab tape layer.

9. The jelly roll according to claim 8, wherein two third tape layers are disposed on a winding tail of the positive electrode plate, first ends of the two third tape layers are respectively overlapped at second ends, located on the two opposite sides of the positive electrode current collector, of the positive electrode active layer, and in the thickness direction of the jelly roll, projections of second ends of the two third tape layers are both connected to a projection of an end, away from the negative tab, of the positive tab.

10. The jelly roll according to claim 9, wherein a sum of thicknesses of the two second tape layers and thicknesses of the two third tape layers is equal to a first thickness value, a sum of a thickness of the positive tab, a thickness of the first positive tab tape layer, and a thickness of the second positive tab tape layer is equal to a second thickness value; and
a difference between the first thickness value and the second thickness value ranges from 80% to 120%.

11. The jelly roll according to any one of claims 8 to 10, further comprising a separator, wherein the separator is disposed between the positive electrode plate and the negative electrode plate;
a sum of a thickness of the positive tab, a thickness of the first positive tab tape layer, a thickness of the second positive tab tape layer, a twice thickness of the positive electrode current collector, and a twice thickness of the separator is equal to a third thickness value, and a twice thickness of the first tape layer is equal to a fourth thickness value; and
a difference between the third thickness value and the fourth thickness value ranges from 80% to 120%.

12. The jelly roll according to any one of claims 8 to 11, further comprising a fourth tape layer, wherein the fourth tape layer is adhered to at least one side of an outer surface of the jelly roll, and in the thickness direction of the jelly roll, a projection of the fourth tape layer is located between a projection of the negative tab and a projection of the positive tab.

13. The jelly roll according to any one of claims 8 to 12, further comprising a protective tape layer disposed on two opposite sides of a portion of the positive electrode current collector between the positive tab and the negative tab.

14. The jelly roll according to any one of claims 8 to 13, wherein in the thickness direction of the jelly roll, an end of a winding tail of the positive electrode current collector extends to a portion between a projection of the positive tab and a projection of the negative tab, and the winding tail of the positive electrode current collector is provided with a sealing tape layer.

15. A pouch cell, comprising: a housing and the jelly roll according to any one of claims 1 to 14, wherein the jelly roll is packaged within the housing.

## Patentansprüche

1. Eine Jelly-Roll, beinhaltend: eine negative Elektrodenplatte, wobei entlang einer Wicklungsrichtung eine innere Oberfläche einer Biegeregion der negativen Elektrodenplatte mit einer ersten Bandschicht bedeckt ist, und in der Dickenrichtung der Jelly-Roll ein Überhang von zwei Enden der ersten Bandschicht mit einem Überhang eines Wicklungsanfangs der negativen Elektrodenplatte verbunden ist oder sich damit teilweise überlappt;
ein ausgesparter Abschnitt auf einer Seite der ersten Bandschicht weg von der einseitigen nicht mit Aktivschicht beschichteten Region der negativen Elektrode angeordnet ist; und
eine Dicke der ersten Bandschicht an dem ausgesparten Abschnitt geringer als eine Dicke von mindestens einem Abschnitt der ersten Bandschicht, der sich von dem ausgesparten Abschnitt unterscheidet, ist; und
die erste Bandschicht eine Substratschicht und eine Haftschicht beinhaltet und die erste Bandschicht durch die Haftschicht an einer Oberfläche der Biegeregion klebt.

2. Jelly-Roll gemäß Anspruch 1, ferner beinhaltend: einen negativen Ableiter, wobei die negative Elektrodenplatte einen Stromkollektor der negativen Elektrode und eine Aktivschicht der negativen Elektrode beinhaltet, und die Aktivschicht der negativen Elektrode auf zwei entgegengesetzten Seiten des Stromkollektors der negativen Elektrode aufgetragen ist; und ein Wicklungsanfang des Stromkollektors der negativen Elektrode sequenziell entlang der Wicklungsrichtung frei liegt, sodass er eine doppelseitige nicht mit Aktivschicht beschichtete Region der negativen Elektrode und eine einseitige nicht mit Aktivschicht beschichtete Region der negativen Elektrode bildet, und der negative Ableiter innerhalb der doppelseitigen nicht mit Aktivschicht beschichteten Region der negativen Elektrode angeordnet ist; und
die erste Bandschicht sich innerhalb der einseitigen nicht mit Aktivschicht beschichteten Region der negativen Elektrode befindet, und in der Dickenrichtung der Jelly-Roll der Überhang der zwei Enden der ersten Bandschicht mit einem Überhang eines Endes des negativen Ableiters nahe der Biegeregion verbunden ist.

3. Jelly-Roll gemäß Anspruch 1, wobei ein Material der Substratschicht Folgendes beinhaltet: mindestens eines von gegossenem Polypropylen, uniaxial gestrecktem Polypropylen, biaxial gestrecktem Polypropylen, Polyethylen, Polyesterfaser oder Polyvinylchlorid; und ein Material der Haftschicht Folgendes beinhaltet: mindestens eines von wasserbasiertem Klebstoff, ölbasiertem Klebstoff, Heißschmelzklebstoff, Naturkautschuk oder Synthesekautschuk.

4. Jelly-Roll gemäß Anspruch 1, wobei eine Dicke einer mittleren Region des ausgesparten Abschnitts geringer als eine Dicke einer anderen Region des ausgesparten Abschnitts ist, die mittlere Region des ausgesparten Abschnitts eine mittlere Region des ausgesparten Abschnitts in einer Längsrichtung der negativen Elektrodenplatte ist, und eine Dicke des ausgesparten Abschnitts von der mittleren Region zu beiden Seiten des ausgesparten Abschnitts allmählich zunimmt; und
der mindestens eine Abschnitt Abschnitte jeweils nahe zwei Enden des ausgesparten Abschnitts beinhaltet.

5. Jelly-Roll gemäß Anspruch 1, wobei die Dicke der mittleren Region des ausgesparten Abschnitts von 3 µm bis 8 µm reicht; und/oder
in der Längsrichtung der negativen Elektrodenplatte eine Größe einer Öffnung des ausgesparten Abschnitts von 1 mm bis 5 mm reicht; und/oder die mittlere Region des ausgesparten Abschnitts einer mittleren Region der einseitigen nicht mit Aktivschicht beschichteten Region der negativen Elektrode in der Längsrichtung der negativen Elektrodenplatte entspricht.

6. Jelly-Roll gemäß einem der Ansprüche 1 bis 5, ferner beinhaltend einen negativen Ableiter und eine Bandschicht des negativen Ableiters, wobei eine Oberfläche des negativen Ableiters von der Bandschicht des negativen Ableiters bedeckt ist und in der Längsrichtung der negativen Elektrodenplatte eine Länge der Bandschicht des negativen Ableiters gleich einem ersten Längenwert ist, eine Länge des negativen Ableiters gleich einem zweiten Längenwert ist und der erste Längenwert größer als oder gleich dem zweiten Längenwert ist.

7. Jelly-Roll gemäß einem der Ansprüche 1 bis 6, ferner beinhaltend einen negativen Ableiter, eine positive Elektrodenplatte und eine positive Ableiteranordnung, wobei die positive Elektrodenplatte einen Stromkollektor der positiven Elektrode und eine Aktivschicht der positiven Elektrode beinhaltet und die Aktivschicht der positiven Elektrode auf zwei entgegengesetzten Seiten des Stromkollektors der positiven Elektrode aufgetragen ist; und ein Wicklungsanfang des Stromkollektors der positiven Elektrode frei liegt, sodass er eine doppelseitige nicht mit Aktivschicht beschichtete Region der positiven Elektrode bildet, die positive Ableiteranordnung innerhalb der doppelseitigen nicht mit Aktivschicht beschichteten Region der positiven Elektrode angeordnet ist und einen voreingestellten Abstand von dem negativen Ableiter aufweist und der negative Ableiter sich zwischen der positiven Ableiteranordnung und der Biegeregion befindet; und
zwei entgegengesetzte Seiten der doppelseitigen nicht mit Aktivschicht beschichteten Region der positiven Elektrode beide mit einer zweiten Bandschicht versehen sind, erste Enden der zwei zweiten Bandschichten an jeweiligen ersten Enden der Aktivschichten der positiven Elektrode, die sich auf den zwei entgegengesetzten Seiten des Stromkollektors der positiven Elektrode befinden, überlappen und zweite Enden der zwei zweiten Bandschichten beide mit einem Ende der positiven Ableiteranordnung weg von dem negativen Ableiter verbunden sind.

8. Jelly-Roll gemäß Anspruch 7, wobei die positive Ableiteranordnung einen positiven Ableiter, eine erste Bandschicht des positiven Ableiters und eine zweite Bandschicht des positiven Ableiters beinhaltet, eine Oberfläche des positiven Ableiters von der ersten Bandschicht des positiven Ableiters bedeckt ist und eine Seite der doppelseitigen nicht mit Aktivschicht beschichteten Region der positiven Elektrode weg von dem positiven Ableiter von der zweiten Bandschicht des positiven Ableiters bedeckt ist, wobei eine Position der zweiten Bandschicht des positiven Ableiters einer Position der ersten Bandschicht des positiven Ableiters entgegengesetzt ist;
wobei zweite Enden der zwei zweiten Bandschichten mit der ersten Bandschicht des positiven Ableiters bzw. einem Ende der zweiten Bandschicht des positiven Ableiters weg von dem negativen Ableiter verbunden sind; und/oder die zweite Bandschicht, die sich auf einer Seite der doppelseitigen nicht mit Aktivschicht beschichteten Region der positiven Elektrode weg von dem positiven Ableiter befindet, mit der zweiten Bandschicht des positiven Ableiters in einem Stück ist; und/oder die zweite Bandschicht, die sich auf einer Seite der doppelseitigen nicht mit Aktivschicht beschichteten Region der positiven Elektrode, die mit dem positiven Ableiter versehen ist, befindet, mit der zweiten Bandschicht des positiven Ableiters in einem Stück ist.

9. Jelly-Roll gemäß Anspruch 8, wobei zwei dritte Bandschichten auf einem Wicklungsende der positiven Elektrodenplatte angeordnet sind, erste Enden der zwei dritten Bandschichten jeweils an zweiten Enden der Aktivschicht der positiven Elektrode, die sich auf den zwei entgegengesetzten Seiten des Stromkollektors der positiven Elektrode befinden, überlappen und in der Dickenrichtung der Jelly-Roll Überhänge von zweiten Enden der zwei dritten Bandschichten beide mit einem Überhang eines Endes des positiven Ableiters weg von dem negativen Ableiter verbunden sind.

10. Jelly-Roll gemäß Anspruch 9, wobei eine Summe von Dicken der zwei zweiten Bandschichten und Dicken der zwei dritten Bandschichten gleich einem ersten Dickenwert ist, eine Summe einer Dicke des positiven Ableiters, einer Dicke der ersten Bandschicht des positiven Ableiters und einer Dicke der zweiten Bandschicht des positiven Ableiters gleich einem zweiten Dickenwert ist; und
ein Unterschied zwischen dem ersten Dickenwert und dem zweiten Dickenwert von 80 % bis 120 % reicht.

11. Jelly-Roll gemäß einem der Ansprüche 8 bis 10, ferner beinhaltend einen Separator, wobei der Separator zwischen der positiven Elektrodenplatte und der negativen Elektrodenplatte angeordnet ist;
eine Summe einer Dicke des positiven Ableiters, einer Dicke der ersten Bandschicht des positiven Ableiters, einer Dicke der zweiten Bandschicht des positiven Ableiters, einer zweifachen Dicke des Stromkollektors der positiven Elektrode und einer zweifachen Dicke des Separators gleich einem dritten Dickenwert ist und eine zweifache Dicke der ersten Bandschicht gleich einem vierten Dickenwert ist; und
ein Unterschied zwischen dem dritten Dickenwert und dem vierten Dickenwert von 80 % bis 120 % reicht.

12. Jelly-Roll gemäß einem der Ansprüche 8 bis 11, ferner beinhaltend eine vierte Bandschicht, wobei die vierte Bandschicht auf mindestens eine Seite einer äußeren Oberfläche der Jelly-Roll geklebt ist und in der Dickenrichtung der Jelly-Roll ein Überhang der vierten Bandschicht sich zwischen einem Überhang des negativen Ableiters und einem Überhang des positiven Ableiters befindet.

13. Jelly-Roll gemäß einem der Ansprüche 8 bis 12, ferner beinhaltend eine Schutzbandschicht, die auf zwei entgegengesetzten Seiten eines Abschnitts des Stromkollektors der positiven Elektrode zwischen dem positiven Ableiter und dem negativen Ableiter angeordnet ist.

14. Jelly-Roll gemäß einem der Ansprüche 8 bis 13, wobei in der Dickenrichtung der Jelly-Roll sich ein Ende eines Wicklungsendes des Stromkollektors der positiven Elektrode zu einem Abschnitt zwischen einem Überhang des positiven Ableiters und einem Überhang des negativen Ableiters erstreckt und das Wicklungsende des Stromkollektors der positiven Elektrode mit einer Siegelbandschicht versehen ist.

15. Eine Pouch-Zelle, beinhaltend: ein Gehäuse und die Jelly-Roll gemäß einem der Ansprüche 1 bis 14, wobei die Jelly-Roll innerhalb des Gehäuses verpackt ist.

## Revendications

1. Un rouleau de gelée (*jelly roll*), comprenant : une plaque d'électrode négative, où le long d'un sens d'enroulement, une surface interne d'une région de courbure de la plaque d'électrode négative est recouverte d'une première couche formant bande, et dans le sens de l'épaisseur du rouleau de gelée, une protubérance de deux extrémités de la première couche formant bande est reliée à ou partiellement chevauchée par une protubérance d'une tête d'enroulement de la plaque d'électrode négative ;
une portion creuse est disposée sur un côté, à distance de la région à simple côté d'électrode négative non revêtue d'une couche active, de la première couche formant bande ;
une épaisseur de la première couche formant bande au niveau de la portion creuse est inférieure à une épaisseur d'au moins une portion, différente de la portion creuse, de la première couche formant bande ; et
la première couche formant bande comprend une couche de substrat et une couche adhésive, et la première couche formant bande adhère à une surface de la région de courbure par la couche adhésive.

2. Le rouleau de gelée selon la revendication 1, comprenant en outre : une patte négative,
où la plaque d'électrode négative comprend un collecteur de courant d'électrode négative et une couche active d'électrode négative, et la couche active d'électrode négative est revêtue sur deux côtés opposés du collecteur de courant d'électrode négative ; et une tête d'enroulement du collecteur de courant d'électrode négative est successivement exposée le long du sens d'enroulement pour former une région à double côté d'électrode négative non revêtue d'une couche active et une région à simple côté d'électrode négative non revêtue d'une couche active, et la patte négative est disposée au sein de la région à double côté d'électrode négative non revêtue d'une couche active ; et
la première couche formant bande est située au sein de la région à simple côté d'électrode négative non revêtue d'une couche active, et dans le sens de l'épaisseur du rouleau de gelée, la protubérance des deux extrémités de la première couche formant bande est reliée à une protubérance d'une extrémité, à proximité de la région de courbure, de la patte négative.

3. Le rouleau de gelée selon la revendication 1, où un matériau de la couche de substrat comprend : au moins l'un parmi du polypropylène coulé, du polypropylène étiré uniaxialement, du polypropylène étiré biaxialement, du polyéthylène, de la fibre de polyester ou du polychlorure de vinyle ; et un matériau de la couche adhésive comprend : au moins l'un parmi un adhésif à base d'eau, un adhésif à base d'huile, un adhésif thermofusible, du caoutchouc naturel ou du caoutchouc synthétique.

4. Le rouleau de gelée selon la revendication 1, où une épaisseur d'une région intermédiaire de la portion creuse est inférieure à une épaisseur d'une autre région de la portion creuse, la région intermédiaire de la portion creuse est une région intermédiaire de la portion creuse dans un sens de la longueur de la plaque d'électrode négative, et une épaisseur de la portion creuse augmente progressivement de la région intermédiaire vers les deux côtés de la portion creuse ; et
l'au moins une portion comprend des portions respectivement à proximité de deux extrémités de la portion creuse.

5. Le rouleau de gelée selon la revendication 1, où l'épaisseur de la région intermédiaire de la portion creuse est comprise entre 3 µm et 8 µm ; et/ou
dans le sens de la longueur de la plaque d'électrode négative, une taille d'une ouverture de la portion creuse est comprise entre 1 mm et 5 mm ; et/ou
la région intermédiaire de la portion creuse correspond à une région intermédiaire de la région à simple côté d'électrode négative non revêtue d'une couche active dans le sens de la longueur de la plaque d'électrode négative.

6. Le rouleau de gelée selon l'une quelconque des revendications 1 à 5, comprenant en outre une patte négative et une couche formant bande de la patte négative, où une surface de la patte négative est recouverte de la couche formant bande de la patte négative, et dans le sens de la longueur de la plaque d'électrode négative, une longueur de la couche formant bande de la patte négative est égale à une première valeur de longueur, une longueur de la patte négative est égale à une deuxième valeur de longueur, et la première valeur de longueur est supérieure ou égale à la deuxième valeur de longueur.

7. Le rouleau de gelée selon l'une quelconque des revendications 1 à 6, comprenant en outre une patte négative, une plaque d'électrode positive et un ensemble patte positive, où la plaque d'électrode positive comprend un collecteur de courant d'électrode positive et une couche active d'électrode positive, et la couche active d'électrode positive est revêtue sur deux côtés opposés du collecteur de courant d'électrode positive ; et une tête d'enroulement du collecteur de courant d'électrode positive est exposée pour former une région à double côté d'électrode positive non revêtue d'une couche active, l'ensemble patte positive est disposé dans la région à double côté d'électrode positive non revêtue d'une couche active et a une distance prédéfinie par rapport à la patte négative, et la patte négative est située entre l'ensemble patte positive et la région de courbure ; et
deux côtés opposés de la région à double côté d'électrode positive non revêtue d'une couche active sont tous deux pourvus d'une deuxième couche formant bande, des premières extrémités des deux deuxièmes couches formant bande sont respectivement chevauchées au niveau de premières extrémités des couches actives d'électrode positive situées sur les deux côtés opposés du collecteur de courant d'électrode positive, et des deuxièmes extrémités des deux deuxièmes couches formant bande sont toutes deux reliées à une extrémité, à distance de la patte négative, de l'ensemble patte positive.

8. Le rouleau de gelée selon la revendication 7, où l'ensemble patte positive comprend une patte positive, une première couche formant bande de patte positive, et une deuxième couche formant bande de patte positive, une surface de la patte positive est recouverte de la première couche formant bande de patte positive, et un côté, à distance de la patte positive, de la région à double côté d'électrode positive non revêtue d'une couche active est recouvert de la deuxième couche formant bande de patte positive, une position de la deuxième couche formant bande de patte positive étant à l'opposé d'une position de la première couche formant bande de patte positive ;
où de deuxièmes extrémités des deux deuxièmes couches formant bande sont respectivement reliées à la première couche formant bande de patte positive et à une extrémité, à distance de la patte négative, de la deuxième couche formant bande de patte positive ; et/ou
la deuxième couche formant bande située sur un côté, à distance de la patte positive, de la région à double côté d'électrode positive non revêtue d'une couche active est intégrée à la deuxième couche formant bande de patte positive ; et/ou
la deuxième couche formant bande située sur un côté, pourvue de la patte positive, de la région à double côté d'électrode positive non revêtue d'une couche active est intégrée à la deuxième couche formant bande de patte positive.

9. Le rouleau de gelée selon la revendication 8, où deux troisièmes couches formant bande sont disposées sur une queue d'enroulement de la plaque d'électrode positive, des premières extrémités des deux troisièmes couches formant bande sont respectivement chevauchées au niveau des deuxièmes extrémités, situées sur les deux côtés opposés du collecteur de courant d'électrode positive, de la couche active d'électrode positive, et dans le sens de l'épaisseur du rouleau de gelée, des protubérances de deuxièmes extrémités des deux troisièmes couches formant bande sont toutes deux reliées à une protubérance d'une extrémité, à distance de la patte négative, de la patte positive.

10. Le rouleau de gelée selon la revendication 9, où une somme des épaisseurs des deux deuxièmes couches formant bande et des épaisseurs des deux troisièmes couches formant bande est égale à une première valeur d'épaisseur, une somme d'une épaisseur de la patte positive, d'une épaisseur de la première couche formant bande de patte positive, et d'une épaisseur de la deuxième couche formant bande positive est égale à une deuxième valeur d'épaisseur ; et
une différence entre la première valeur d'épaisseur et la deuxième valeur d'épaisseur est comprise entre 80 % et 120 %.

11. Le rouleau de gelée selon l'une quelconque des revendications 8 à 10, comprenant en outre un séparateur, où le séparateur est disposé entre la plaque d'électrode positive et la plaque d'électrode négative ;
une somme d'une épaisseur de la patte positive, d'une épaisseur de la première couche formant bande de patte positive, d'une épaisseur de la deuxième couche formant bande de patte positive, d'une double épaisseur du collecteur de courant d'électrode positive, et d'une double épaisseur du séparateur est égale à une troisième valeur d'épaisseur, et une double épaisseur de la première couche formant bande est égale à une quatrième valeur d'épaisseur ; et
une différence entre la troisième valeur d'épaisseur et la quatrième valeur d'épaisseur est comprise entre 80 % et 120 %.

12. Le rouleau de gelée selon l'une quelconque des revendications 8 à 11, comprenant en outre une quatrième couche formant bande, où la quatrième couche formant bande est collée à au moins un côté d'une surface externe du rouleau de gelée, et dans le sens de l'épaisseur du rouleau de gelée, une protubérance de la quatrième couche formant bande est située entre une protubérance de la patte négative et une protubérance de la patte positive.

13. Le rouleau de gelée selon l'une quelconque des revendications 8 à 12, comprenant en outre une couche formant bande protectrice disposée sur deux côtés opposés d'une portion du collecteur de courant d'électrode positive entre la patte positive et la patte négative.

14. Le rouleau de gelée selon l'une quelconque des revendications 8 à 13, où dans le sens de l'épaisseur du rouleau de gelée, une extrémité d'une queue d'enroulement du collecteur de courant d'électrode positive s'étend jusqu'à une portion entre une protubérance de la patte positive et une protubérance de la patte négative, et la queue d'enroulement du collecteur de courant d'électrode positive est pourvue d'une couche formant bande de scellement.

15. Une cellule poche, comprenant : un boîtier et le rouleau de gelée selon l'une quelconque des revendications 1 à 14, où le rouleau de gelée est conditionné dans le boîtier.
